Europäisches Patentamt

European Patent Office

Office européen des brevets

(19)

(11) Veröffentlichungsnummer : **0 062 223**
**B1**

(12) **EUROPÄISCHE PATENTSCHRIFT**

(45) Veröffentlichungstag der Patentschrift :
09.10.85

(21) Anmeldenummer : 82102376.9

(22) Anmeldetag : 23.03.82

(51) Int. Cl.⁴ : **C 08 L 33/12, C 08 L 25/12,**
**C 08 L 51/04**

(54) **Transparente, schlagzähe Formmasse.**

(30) Priorität : 04.04.81 DE 3113627

(43) Veröffentlichungstag der Anmeldung :
13.10.82 Patentblatt 82/41

(45) Bekanntmachung des Hinweises auf die Patenterteilung : 09.10.85 Patentblatt 85/41

(84) Benannte Vertragsstaaten :
BE DE FR GB IT NL

(56) Entgegenhaltungen :
FR-A- 1 526 375
Die Akte enthält technische Angaben, die nach dem
Eingang der Anmeldung eingereicht wurden und die
nicht in dieser Patentschrift enthalten sind.

(73) Patentinhaber : BASF Aktiengesellschaft
Carl-Bosch-Strasse 38
D-6700 Ludwigshafen (DE)

(72) Erfinder : Mc Kee, Graham Edmund, Dr.
Kastanienweg 8
D-6940 Weinheim (DE)
Erfinder : Haaf, Franz, Dr.
Leistadter Strasse 9
D-6702 Bad Duerkheim (DE)
Erfinder : Benker, Klaus
Fuerstenweg 52
D-6730 Neustadt (DE)
Erfinder : Stephan, Rudolf, Dr.
Homburger Strasse 19
D-6700 Ludwigshafen (DE)
Erfinder : Breuer, Hans, Dr.
Steinbrunnerweg 13
D-6719 Battenberg (DE)
Erfinder : Hambrecht, Juergen, Dr.
Werderstrasse 30
D-6900 Heidelberg (DE)

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

## Beschreibung

Gegenstand der Erfindung sind transparente, schlagzähe, thermoplastische Formmassen aus einem harten Methylmethacrylat-Polymerisat A, einem harten Styrol/Acrylnitril-Polymerisat A, einem harten Styrol/Acrylnitril-Polymerisat B und einem weichen Pfropfcopolymerisat C von Alkyl(meth)acrylat und gegebenenfalls Styrol auf einen Kautschuk.

Transparente, schlagzähe, thermoplastische Formmassen sind bereits mehrfach beschrieben worden, beispielsweise in

(1) DE-OS 15 20 631
(2) US-PS 4 097 555
(3) GB-PS 1 139 588
(4) DE-AS 20 45 742
(5) DE-OS 28 28 517

In (1) werden transparente, schlagzähe Formmassen beschrieben, bei denen Styrol, Acrylnitril und bestimmte Mengen Methylmethacrylat in Gegenwart von Styrol-Butadien-Mischpolymeren polymerisiert werden. Daraus hergestellte Produkte besitzen eine von der Verarbeitungstemperatur abhängige Transparenz, sind sehr stark vergilbt und besitzen eine äußerst unangenehmen Geruch, der den Einsatz im Verpackungssektor stark behindert. Negativ wirkt sich außerdem eine stark auftretende Bindenahtmarkierung aus.

In (2) werden transparente, thermoplastische Formmasen beschrieben, die aufgebaut sind aus einer Hartkomponente, bestehend aus einem Terpolymerisat aus Styrol, Acrylnitril und Methylmethacrylat und einer Weichkomponente, bestehend aus einem Styrol/Butadien (SB)-Blockcopolymeren, das mit der gleicher Zusammensetzung der Termonomeren aus der Hartkomponente gepfropft und damit im Brechungsindex an die Hartkomponente angeglichen wird. Auch diese Formmassen sind mit einer starken Gelbfärbung und einem unangenehmen Geruch behaftet. Die Transparenz genügt zumeist nicht den Anforderungen.

In (3), (4) und (5) werden transparente Formmassen beschrieben, die aus einer Mischung aus Polymethylmethacrylat und Styrol-Acrylnitril-Copolymeren als Hartkomponente und einer Weichkomponente auf Basis Polybutadien oder einem SB-Kautschuk, die mit Styrol und Acrylnitril gepfropft sind, aufgebaut sind. In (3) und (4) ist die Transparenz der Formmassen sehr stark von der Verarbeitungstemperatur abhängig. In den Formmassen (5) ist die Transparenz auch bei hohen Temperaturdifferenzen während der Verarbeitung gewährleistet. Allen Formmassen (3), (4) und (5) ist jedoch gemeinsam, daß sie eine schwache Gelbfärbung aufweisen, die in bestimmten Anwendungsbereichen, z. B. im Verpackungssektor ebenso schädlich ist, wie der unangenehme Geruch, der auch diesen Produkten zueigen ist.

Es bestand somit die Aufgabe, Formmassen zu entwickeln, die die vorstehend beschriebenen Nachteile nicht aufweisen. Diese Aufgabe wird durch die vorliegende Erfindung gelöst. Die erfindungsgemäßen Formmassen besitzen eine von der Verarbeitungstemperatur unabhängige Transparenz, sie sind wasserklar und zeigen auch bei höheren Verarbeitungstemperaturen keine Gelbfärbung. Sie sind außerdem geruchlos.

Die Erfindung betrifft transparente, schlagzähe Formmassen, bestehend aus einem Gemisch von

A) 15 bis 70 Gew.-Teilen eines Methylmethacrylat-Polymerisates aus 90 bis 100 Gew.% Methylmethacrylat und 10 bis 0 Gew.% eines Alkylacrylats mit 1 bis 8 Kohlenstoffatomen im Alkylrest,

B) 10 bis 50 Gew.-Teilen eines Styrol/Acrylnitril-Copolymerisates aus 78 bis 88 Gew.-Teilen Styrol und 22 bis 12 Gew.-Teilen Acrylnitril, das ein mittleres Molekulargewicht (Gewichtsmittel) von 60 000 bis 300 000, bestimmt durch Lichtstreuung in Dimethylformamid, aufweist

C) 20 bis 50 Gew.-Teilen eines vernetzten, eine Teilchengröße von 0,2 μm oder kleiner aufweisenden Pfropfmischpolymerisates und

D) gegebenenfalls üblichen Zusatzstoffen in Mengen bis zu 20 Gew.%, bezogen auf die Summe der Komponenten A, B und C, wobei sich die Gew.-Teile von A, B und C auf 100 addieren und die Differenz zwischen dem Brechungsindex der Komponente C und dem des Gemisches der Komponente A und B und ggf. D weniger als 0,005 beträgt,

dadurch gekennzeichnet, daß das Pfropfmischpolymerisat C) hergestellt ist durch Pfropfung von

$C_1$) 50 bis 80 Gew.%, bezogen auf das Pfropfmischpolymerisat C, einer elastomeren Pfropfgrundlage mit einer Glastemperatur unter − 20 °C mit

$C_2$) 20 bis 50 Gew.% folgender Komponenten in Mischung oder nacheinander :

$C_{21}$) 40 bis 100 Gew.-Teile eines oder mehrerer (Meth)acrylsäureester von $C_1$-$C_8$-Alkanolen und

$C_{22}$) 0 bis 60 Gew.-Teile eines vinylaromatischen Monomeren mit bis zu 12 C-Atomen.

Für die erfindungsgemäße Formmasse wird als harte Komponente A meist ein Homopolymerisat des Methylmethacrylats verwendet ; es sind jedoch auch Copolymerisate von Methylmethacrylat mit bis zu 10

2

Gew.% eines Alkylacrylats mit 1 bis 8 Kohlenstoffatomen im Alkylrest, beispielsweise Methylacrylat und Butylacrylat, verwendbar. Durch den Einbau von Alkylacrylaten in das Methylkmethacrylat-Polymerisat wird die Fließfähigkeit der Komponente A und damit auch die der Gemische verbessert. Methylmethacrylat-Polymerisate können durch Substanz-, Lösungs- oder Perlpolymerisation nach bekannten Methoden hergestellt werden. Die Methylmethacrylat-Polymerisate, insbesondere solche mit einem Alkylacrylat-Gehalt von 0,5 bis 7,0 Gew.%, haben noch eine ausreichende Wärmeformbeständigkeit. Die bevorzugt angewendeten Homo- bzw. Copolymerisate besitzen Gewichtsmittelwerte des Molekulargewichts, bestimmt durch Lichtstreuung in Chloroform, im Bereich von 60 000 bis 300 000 und sind im Handel erhältlich.

Die harte Komponente B der erfindungsgemäßen Formmasse ist ein Copolymerisat aus 78 bis 88 Gew.% Styrol und 22 bis 12 Gew.% Acrylnitril ; außerhalb dieses Bereiches der Zusammensetzung erhält man bei Verarbeitungstemperaturen über 240 °C trübe Formteile, die Bindenähte aufweisen. Die Copolymerisate können nach allen bekannten Verfahren hergestellt werden, beispielsweise durch Substanz-, Lösungs-, Suspensions- oder Emulsionspolymerisation. Bevorzugt werden in Lösung erzeugte Copolymerisate verwendet. Die Copolymerisate sollen gewichtsmittlere Molekulargewichte, bestimmt durch Lichtstreuung in Dimethylformamid, im Bereich von 60 000 bis 300 000 aufweisen und werden bevorzugt nach dem in der GB-PS 14 72 195 beschriebenen Verfahren hergestellt. Styrol/Acrylnitril-Copolymerisate haben, verglichen mit der Komponente A, eine gute Fließfähigkeit. Diese Eigenschaft wird entsprechend dem Gehalt an Komponente B auch auf die erfindungsgemäße Formmasse übertragen.

Die weiche Komponente C der erfindungsgemäßen Formmasse ist ein Pfropfcopolymerisat mit einem Kautschuk mit einer Glastemperatur unter − 20 °C als Pfropfgrundlage. Die Pfropfgrundlage C wird in üblicher Weise durch Emulsionspolymerisation hergestellt ; anschließend wird in ebenso bekannter Weise der Pfropfreis $C_{21}$ und ggf. $C_{22}$ aufgepfropft und sprühgetrocknet. Die Teilchengröße der vernetzten Weichkomponente C soll 0,2 µm oder weniger betragen. Derartige Produkte sind handelsüblich.

Die verwendeten Kautschuke müssen elastomere Eigenschaften haben, damit sie eine Verbesserung der Schlagzähigkeit der erfindungsgemäßen Mischung bewirken. Ein Maß für diese elastomere Eigenschaft ist die Glastemperatur nach K.H. Illers und H. Breuer, Kolloid-Zeitschrift 176 (1961), S. 110. Als Pfropfgrundlage $C_1$ kommen Copolymerisate von Butadien und/oder Isopren mit Styrol oder einem in α-Stellung oder vorzugsweise am Kern mit einer (oder am Kern auch mehreren) Alkylgruppe(n), vorzugsweise Methyl, substituierten Styrol mit bis zu 12 C-Atomen in Frage.

Die Pfropfgrundlage $C_1$ ist in der Komponente C in einer Menge von 50 bis 80 Gew.-Teilen, vorzugsweise 55 bis 70 Gew.-Teilen, enthalten. Der Pfropfreis macht 20 bis 50 Gew.%, vorzugsweise 30 bis 45 Gew.% des gesamten Pfropfkautschuks aus. Der Pfropfreis besteht aus 40 bis 100 Gew.% eines oder mehrerer (Meth)acrylsäureester von $C_1$-$C_8$-Alkanolen. Bevorzugt wird Methacrylsäureester, dem geringe Mengen weiterer Acrylsäureester, z. B. Methyl-, Ethyl-, Propyl- oder Butylacrylat, beigegeben sind. Dieser Pfropfreis kann bis zu 60 Gew.% eines vinylaromatischen Monomeren mit bis zu 12 C-Atomen enthalten. Am Kern alkylsubstituierte Styrole mit bis zu 12 C-Atomen und vor allem Styrol selbst sind bevorzugt. Bei Verwendung von mehr als einem Monomeren für den Pfropfreis kann ein Schalenaufbau erstrebenswert sein. Die verschiedenen Schalen können dabei verschiedene Zusammensetzungen besitzen. Dies wird erzielt, indem verschiedene Monomeren(mischungen) zu verschiedenen Zeiten bei der Polymerisation zugegeben werden.

Die Formmasse soll 15 bis 70, vorzugsweise 30 bis 60 Gew.-Teile der Komponente A, 10 bis 50, vorzugsweise 10 bis 40 Gew.-Teile der Komponente B und 20 bis 50, vorzugsweise 25 bis 40 Gew.-Teile der Komponente C enthalten. Die erfindungsgemäßen Formmassen können, bezogen auf das Gemisch aus A, B und C, noch bis zu 20 Gew.% üblicher Zusatzstoffe, die sich in den Hartkomponenten A und B klar lösen, enthalten. Als solche kommen beispielsweise in Betracht : Styrol/Maleinsäureanhydrid-Copolymerisat, Farbstoffe, Stabilisatoren, Schmiermittel und Antistatika.

Das Vermischen der Komponenten A, B und C und gegebenenfalls der Zusatzstoffe D erfolgt bevorzugt in der Schmelze. Die Komponenten werden in der Regel bei Temperaturen zwischen 200 und 300 °C verarbeitet. Es ist auch möglich, Lösungen oder Suspensionen der Komponenten zu vermischen und das Lösungs- oder Suspensionsmittel anschließend zu entfernen.

Die Verarbeitungsbreite der erfindungsgemäßen, transparenten, thermoplastischen Mischungen oberhalb 200 °C ist nicht durch Unverträglichkeitserscheinungen eingeschränkt. Die Mischungen lassen sich zwischen 200 und 300 °C ohne Einbußen in der Transparenz, ohne merkbare Vergilbung und ohne eine lästige Geruchsbildung verarbeiten. Im Spritzguß verarbeitete Formteile zeigen keinerlei Bindenahtmarkierungen und zeichnen sich durch eine hohe Transparenz und einen hohen Oberflächenglanz aus.

Die mechanischen Eigenschaften entsprechen hochschlagzähen ABS-Einstellungen.

Eine Voraussetzung für die Transparenz der erfindungsgemäßen Formmassen ist, daß die Differenz zwischen dem Brechungsindex der weichen Komponente C und dem des Gemisches der beiden harten Komponenten A und B und ggf. der Füllstoffe D weniger als 0,005 beträgt. Der Brechungsindex des Gemisches der harten Komponenten A und B ergibt sich durch Linearkombination aus den Brechzahlen der Einzelkomponenten mit deren Gewichtsanteilen. Bei vorgegebenem Brechungsindex der Weichkomponente C wird der Brechungsindex der Hartkomponente durch geeignete Wahl des Verhältnisses A : B angeglichen. Eine weitere wesentliche Voraussetzung für die Unabhängigkeit der Transparenz von der Verarbeitungstemperatur ist die Einhaltung der angegebenen Zusammensetzung der Komponente B.

Aus den erfindungsgemäßen Formmassen können hauptsächlich durch Spritzen oder Blasen Formteile hergestellt werden. Man kann die Formmassen auch verpressen, kalandrieren, extrudieren oder vakuumformen. Sie können überall dort eingesetzt werden, wo die Zähigkeit der herkömmlichen transparenten Kunststoffe nicht genügt, beispielsweise bei Automobilheckleuchten, durchsichtigen Haushaltsgeräten, Spielwaren, Beschichtungen in Verbund mit den verschiedensten Werkstoffen.

Die in den Beispielen und Vergleichsversuchen genannten Verhältnisse und Prozente beziehen sich auf das Gewicht.

Die Bruchenergie wurde nach dem Plastechon-Test (DIN 53443, Blatt 2) an 2 mm dicken, bei Massetemperaturen von 250 °C gespritzten Rundplatten gemessen. Der Brechungsindex $n^{25}_D$ wurde mit einem Abbe-Refraktometer nach der Methode zur Messung der Brechungsindizes bei festen Körpen bestimmt (s. Ullmanns Encyklopädie der technischen Chemie, Band 2/1, S. 486, Herausgeber W. Foerst ; Urban & Schwarzenberg, München-Berlin 1961).

Für die Beispiele und Vergleichsversuche wurden die nachfolgend näher bezeichneten Polymerisate $A_1$, Copolymerisate $B_1$, Pfropfcopolymerisate $C_1$ bis $C_3$ (Stand der Technik) und $C_4$ bis $C_7$ (erfindungsgemäß) verwendet :

$A_1$ Copolymerisat aus Methylmethacrylat und Butylacrylat im Verhältnis 96,0/4,0 ($n^{25}_D$ = 1.492, Molekulargewicht (MW) 110 000).

$B_1$ Copolymerisat aus Styrol und Acrylnitril im Verhältnis 80 : 20 ($n^{25}_D$ = 1.575, MW 250 000).

$C_1$ Pfropfcopolymerisat von 36 % Methylmethacrylat, Styrol und Acrylnitril (54 : 37 : 9) auf 64 % Butadien-Styrol (75 : 25) ($n^{25}_D$ = 1,538).

$C_2$ Pfropfpolymerisat von 35 % Methylmethacrylat, Styrol und Acrylnitril (58 : 37 : 5) auf 65 % Butadien und Styrol (72 : 28) ($n^{25}_D$ = 1,540 3).

$C_3$ Pfropfcopolymerisat von 18 % Methylmethacrylat und Butylacrylat (95 : 5) auf 22 % Styrol und Acrylnitril (90 : 10) auf 60 % Butadien und Styrol (72 : 28) ($n^{25}_D$ = 1,542 8).

$C_4$ Pfropfcopolymerisat von 23 % Methylmethacrylat auf 22 % Styrol und Butylacrylat (90 : 10) auf 55 % Butadien und Styrol (72 : 28) ($n^{25}_D$ = 1,540 2).

$C_5$ Pfropfcopolymerisat von 45 % Methylmethacrylat und Styrol (52 : 48) auf 55 % Butadien und Styrol (75 : 25) ($n^{25}_D$ = 1,537 4).

$C_6$ Pfropfcopolymerisat von 20 % Methylmethacrylat und Äthylacrylat (98 : 2) auf 30 % Styrol auf 50 % Butadien-Styrol (76 : 24) ($n^{25}_D$ = 1,538 0).

$C_7$ Pfropfcopolymerisat von 40 % Methylmethacrylat und Styrol (1 : 1) auf 60 % Butadien und Styrol (78 : 22) ($n^{25}_D$ = 1,539 8).

Die Glastemperatur der Pfropfgrundlage von $C_{1-7}$ lag jeweils unter − 20 °C.

In den Vergleichsversuchen 1 bis 3 der Tabelle sind Eigenschaften von Formmassen gemäß dem Stand der Technik (DE-OS 28 28 517) beschrieben.

Die Beispiele 1 bis 4 entsprechen der vorliegenden Erfindung. Bei allen Versuchen und Beispielen war die Differenz zwischen dem Brechungsindex der Komponente C und dem entsprechenden Index des Gemisches aus den Komponenten A und B kleiner als 0,005.

In der Tabelle sind die Zusammensetzung der Mischung, der Yellowness-Index nach ASTM D/1925, die Bruchenergie gemessen nach dem Plastechon-Test (DIN 53 443, Blatt 2) und der Geruch angegeben. Der Geruch wurde von 5 Personen an Granulatproben beurteilt. Die Granulatproben wurden einen Tag in Glasflaschen gelagert. Die Proben der Vergleichsversuche riechen unangenehmer und haben einen höheren Yellowness-Index als die der (erfindungsgemäßen) Beispiele.

(Siehe Tabelle Seite 5 f.)

4

| Vergleichs-versuch (gemäß Stand der Technik) | Polymerisat-Gew.-Teile | Plastechon-test KT $= 250^{\circ}$C | Yellowness-Index | Geruch |
|---|---|---|---|---|
| 1 | 28,6 Teile $A_1$<br>35,4 Teile $B_1$<br>36,0 Teile $C_1$ | 8,7 | 6,80 | unangenehm |
| 2 | 26,9 Teile $A_1$<br>37,1 Teile $B_1$<br>36,0 Teile $C_2$ | 2,0 | 7,05 | unangenehm |
| 3 | 24,4 Teile $A_1$<br>39,6 Teile $B_1$<br>36,0 Teile $C_3$ | 7,8 | 9,80 | unangenehm |

Beispiel

| | | | | |
|---|---|---|---|---|
| 1 | 28,5 Teile $A_1$<br>35,5 Teile $B_1$<br>36,0 Teile $C_4$ | 12,7 | 4,88 | praktisch geruchlos |
| 2 | 29,0 Teile $A_1$<br>35,0 Teile $B_1$<br>36,0 Teile $C_5$ | 5,9 | 2,72 | praktisch geruchlos |
| 3 | 28,6 Teile $A_1$<br>35,4 Teile $B_1$<br>36,0 Teile $C_6$ | 0 | 4,63 | praktisch geruchlos |
| 4 | 27,2 Teile $A_1$<br>36,8 Teile $B_1$<br>36,0 Teile $C_7$ | 7,7 | 2,97 | praktisch geruchlos |

0 062 223

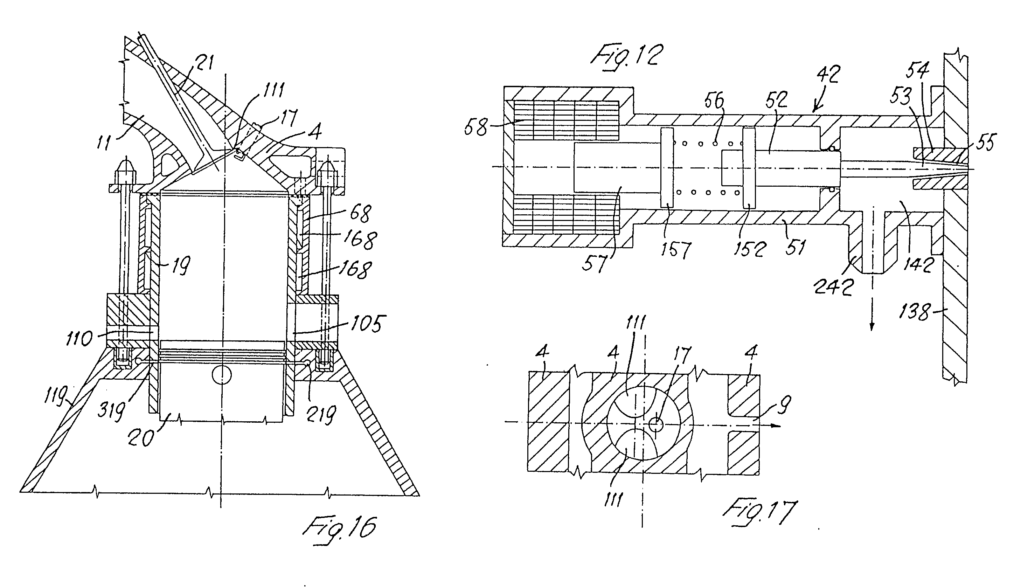

## Patentansprüche

1. Transparente, schlagzähe Formmasse, bestehend aus einem Gemisch von

A) 15 bis 70 Gew.-Teilen eines Methylmethacrylat-Polymerisates aus 90 bis 100 Gew.% Methylmethacrylat und 10 bis 0 Gew.% eines Alkylacrylats mit 1 bis 8 Kohlenstoffatomen im Alkylrest,

B) 10 bis 50 Gew.-Teilen eines Styrol/Acrylnitril-Copolymerisates aus 78 bis 88 Gew.-Teilen Styrol und 22 bis 12 Gew.-Teilen Acrylnitril, das ein mittleres Molekulargewicht (Gewichtsmittel) von 60 000 bis 300 000, bestimmt durch Lichtstreuung in Dimethylformamid, aufweist

C) 20 bis 50 Gew.-Teilen eines vernetzten, eine Teilchengröße von 0,2 µm oder kleiner aufweisenden Pfropfmischpolymerisates und

D) gegebenenfalls üblichen Zusatzstoffen in Mengen bis zu 20 Gew.%, bezogen auf die Summe der Komponenten A, B und C, wobei sich die Gew.-Teile von A, B und C auf 100 addieren und die Differenz zwischen dem Brechungsindex der Komponente C und dem des Gemisches der Komponente A und B und ggf. D weniger als 0,005 beträgt,

dadurch gekennzeichnet, daß das Pfropfmischpolymerisat C) hergestellt ist durch Pfropfung von

$C_1$) 50 bis 80 Gew.%, bezogen auf das Pfropfmischpolymerisat C, einer elastomeren Pfropfgrundlage mit einer Glastemperatur unter − 20 °C mit

$C_2$) 20 bis 50 Gew.% folgender Komponenten in Mischung oder nacheinander :

$C_{21}$) 40 bis 100 Gew.-Teile eines oder mehrerer (Meth)acrylsäureester von $C_1$-$C_8$-Alkanolen und

$C_{22}$) 0 bis 60 Gew.-Teile eines vinylaromatischen Monomeren mit bis zu 12 C-Atomen.

2. Verfahren zur Herstellung von transparenten, schlagzähen Formmassen gemäß Anspruch 1, dadurch gekennzeichnet, daß die Komponenten A, B, C und D in der Schmelze abgemischt werden.

3. Transparente, schlagzähe Formmassen gemäß Anspruch 1, dadurch gekennzeichnet, daß die elastomere Pfropfgrundlage $C_1$ aus einem Copolymerisat folgender Komponenten besteht :

$C_{11}$) 60 bis 90 Gew.-Teile Butadien oder Isopren und

$C_{12}$) 10 bis 40 Gew.-Teile Styrol oder eines Alkylstyrols mit bis zu 12 C-Atomen.

4. Formteile aus Formmassen gemäß einem der Ansprüche 1 bis 3.

## Claims

1. A transparent, impact-resistant molding material consisting of a mixture of

A) 15 to 70 parts by weight of a methylmethacrylate polymer containing 90 to 100 percent by weight of methylmethacrylate units and 10 to 0 percent by weight of units of an alkylacrylate where alkyl is of 1 to 8 carbon atoms,

B) 10 to 50 parts by weight of a styrene/acrylonitrile copolymer containing 78 to 88 parts by weight of styrene units and 22 to 12 parts by weight of acrylonitrile units, and having a weight average molecular weight of from 60,000 to 300,000, determined by light scattering in dimethylformamide,

C) 20 to 50 parts by weight of a crosslinked graft copolymer mixture having a particle size of 0.2 µm or less, and

D) optional conventional additives in amounts up to 20 percent by weight, based on the sum of components A, B and C, the parts by weight of A, B and C totalling 100, and the difference between the refractive index of component C and the refractive index of the mixture of components A and B with or without D being less than 0.005,

wherein the graft copolymer mixture C is produced by grafting

$C_1$) 50 to 80 percent by weight, based on the graft copolymer C, of an elastomeric grafting base having a glass temperature below − 20 °C with

$C_2$) 20 to 50 percent by weight of the following components as a mixture or one after the other :

$C_{21}$) 40 to 100 parts by weight of one or more (meth)acrylates of $C_1$-$C_8$ alkanols and

$C_{22}$) 0 to 60 parts by weight of a vinylaromatic monomer of up to 12 carbon atoms.

2. A process for the production of a transparent, impact-resistant molding material as claimed in claim 1, wherein components A, B, C and D are mixed in the melt.

3. A transparent, impact-resistant molding material as claimed in claim 1, wherein the elastomeric graft base $C_1$ consists of a crosslinked copolymer of the following components :

$C_{11}$) 60 to 90 parts by weight of butadiene or isoprene units, and

$C_{12}$) 10 to 40 parts by weight of units of styrene or an alkylstyrene having up to 12 carbon atoms.

4. A molded part made from a molding material as claimed in any of claims 1 to 3.

## Revendications

1. Matière à mouler résiliente transparente, formée de :

A) 15 à 70 parties en poids d'un polymérisat du méthacrylate de méthyle, composé de 90 à 100 % en poids de méthacrylate de méthyle et de 10 à 0 % en poids d'un acrylate d'alkyle à radical alkyle en $C_1$ à $C_8$ ;

B) 10 à 50 parties en poids d'un copolymérisat du styrène et du nitrile acrylique, composé de 78 à 88 parties en poids de styrène et de 22 à 12 parties en poids d'acrylonitrile, d'un poids moléculaire moyen (en poids), déterminé par diffraction de la lumière dans le diméthyl-formamide, de 60 000 à 300 000 ;

C) 20 à 50 parties en poids d'un copolymérisat de greffage réticulé en particules d'une dimension de 0,2 μm ou moins ;

D) d'additifs usuels éventuels en des proportions pouvant aller jusqu'à 20 % en poids par rapport à la somme des composants A, B et C, la somme des parties en poids de A, de B et de C étant égale à 100 et la différence entre l'indice de réfraction du composant C et l'indice de réfraction du mélange des composants A et B et du composant D éventuel étant inférieure à 0,005, caractérisée en ce que le copolymérisat de greffage C) est préparé par le greffage de

$C_1$) 50 à 80 % en poids par rapport au copolymérisat de greffage C d'une base de greffage élastomère avec une température de transition vitreuse inférieure à − 20 °C et de

$C_2$) 20 à 50 % en poids de

$C_{21}$) 40 à 100 parties d'un ou plusieurs (méth)acrylates d'alcanols en $C_1$ à $C_8$ et

$C_{22}$) 0 à 60 parties en poids d'un monomère vinylaromatique comprenant jusqu'à 12 atomes de carbone,

ces derniers composants étant mis en œuvre, soit en mélange, soit l'un après l'autre.

2. Procédé de préparation de matières à mouler résilientes transparentes suivant la revendication 1, caractérisé en ce que les composants A, B, C et D sont mélangés à l'état fondu.

3. Matières à mouler résilientes transparentes suivant la revendication 1, caractérisées en ce que la base de greffage élastomère $C_1$ est constituée par un copolymérisat des composants ci-après :

$C_{11}$) 60 à 90 parties en poids de butadiène ou d'isoprène,

$C_{12}$) 10 à 40 parties en poids de styrène ou d'un alkylstyrène comprenant jusqu'à 12 atomes de carbone.

4. Eléments façonnés en des matières à mouler suivant l'une ou l'autre des revendications 1 à 3.

Fig.12

Fig.17

Fig.16